# NEUE EUROPÄISCHE PATENTSCHRIFT

(11) **EP 3 233 491 B2**
(45) Veröffentlichungstag und Bekanntmachung des Hinweises auf die Entscheidung über den Einspruch: **12.02.2025**
(45) Hinweis auf die Patenterteilung: 22.05.2019
(21) Anmeldenummer: 15777975.2
(22) Anmeldetag: 14.10.2015
(51) Int. Cl.: B32B 37/00, B32B 27/00, B60R 13/02, B32B 37/02, B44C 1/16

(54) **VERFAHREN ZUR HERSTELLUNG EINES KUNSTSTOFF-FAHRZEUGANBAUTEILS**
METHOD FOR PRODUCING A PLASTIC VEHICLE ATTACHMENT
PROCÉDÉ DE FABRICATION D'UN COMPOSANT DE VÉHICULE EN MATIÈRE SYNTHÉTIQUE

(30) Priorität: 18.12.2014 EP 14198782
(43) Veröffentlichungstag der Anmeldung: 25.10.2017
(73) Patentinhaber: SAINT-GOBAIN GLASS FRANCE, 92400 Courbevoie (FR)
(72) Erfinder: BENYAHIA, Rym, 70188 Stuttgart (DE); FOURNIER, Nicolas, 38860 Les 2 Alpes (FR); WEISSENBERGER,Uwe, 97078 Würzburg (DE); ACQUARONE, Matias, 70376 Stuttgart (DE)
(74) Vertreter: Gebauer, Dieter Edmund
(86) Internationale Anmeldenummer: PCT/EP2015/073738
(87) Internationale Veröffentlichungsnummer: WO 2016/096184

(56) Entgegenhaltungen:
- EP-A1- 2 689 929
- EP-A2- 2 078 618
- EP-B1- 1 424 709
- WO-A1-2007/081915
- WO-A2-2012/083007
- DE-A1- 19 940 244
- FR-A1- 2 971 969
- US-A- 4 350 550

## Beschreibung

Die Erfindung betrifft ein Verfahren zur Herstellung eines polymeren Fahrzeug-Anbauteils, ein polymeres Fahrzeug-Anbauteil und dessen Verwendung.

Im Zuge immer strengerer Vorgaben zur Kohlendioxidemission von Kraftfahrzeugen gibt es starke Bestrebungen, das Gewicht eines Fahrzeugs und damit dessen Treibstoffverbrauch zu senken. Stetige Weiterentwicklungen im Bereich der Kunststoffe ermöglichen den Ersatz von großen Teilen der Metallkarosserie durch entsprechend leichtere Elemente aus polymeren Werkstoffen. Insbesondere Teile oder auch der gesamte Fensterbereich können durch Elemente aus polymeren Werkstoffen ersetzt werden. Diese zeigen in vielen Fällen bei einem deutlich niedrigeren Gewicht eine vergleichbare Härte, Stabilität und Belastbarkeit wie bei einem Karosseriefenster aus Stahl. Zusätzlich wird auf Grund der Gewichtsreduzierung der Schwerpunkt des Fahrzeugs weiter nach unten verlagert, was einen positiven Einfluss auf das Fahrverhalten hat. Formteile aus polymeren Werkstoffen können dabei in praktisch jeder gewünschten Form und Geometrie hergestellt werden.

Viele Werkstoffteile aus Kunststoffen müssen verschiedenen Anforderungen und Funktionen gerecht werden. Wichtige Parameter sind hierbei die Stabilität, Bruchverhalten, Kratzfestigkeit, Schlagzähigkeit oder Kerbschlagzähigkeit. Neben technischen Gesichtspunkten wie Gewicht und Festigkeit der einzelnen Bauteile spielen auch die Form, Geometrie und das Aussehen eine zunehmend wichtige Rolle. Vor allem in der Automobilindustrie sind neben mechanischen Eigenschaften auch Merkmale im Bereich des Designs und der Ästhetik von großer Bedeutung.

Eine etablierte Methode zur Erzeugung optischer Effekte ist das Verfahren zur Folienhinterspritzung (FIM - film insert molding). In diesem Verfahren wird eine entsprechende Folie in das Spritzgießwerkzeug eingelegt und mit einem geeigneten Kunststoff hinterspritzt. Auf diese Weise lassen sich die Oberflächeneigenschaften und Geometrie von polymeren Werkstoffen gezielt und vielseitig beeinflussen und modifizieren. Ein Verfahren zur Herstellung von polymeren Anbauteilen mittels Folienhinterspritzung ist beispielsweise aus WO2013/050208 bekannt. Eine wichtige Voraussetzung für die Anwendung des Verfahrens der Folienhinterspritzung sind temperaturstabile Folien. Zudem müssen auf der Folie befindliche Aufdrucke soweit temperaturbeständig sein, dass sie die Hinterspritzung mit einem flüssigen Polymer wie Polycarbonat überstehen. Wird die Folie so im Spritzgießwerkzeug positioniert, dass sie auf dem fertigen Werkstück später auf der Außenfläche angeordnet ist, ist sie zudem vor äußeren mechanischen und chemischen Eiflüssen nicht geschützt. Dies kann auf Dauer zu einer Beschädigung der Folie und des auf der Folie enthaltenen Aufdrucks führen.

Die Folienhinterspritzung ist ein technisch sehr anspruchsvolles und aufwendiges Verfahren. Zudem sind durch Folienhinterspritzung erzeugte Zierelemente häufig nur schlecht sichtbar, wenn die Folie hinter einer eingefärbten Polymerschicht angeordnet ist und diese Polymerschicht eine nur geringe Transmission aufweist, wie es beispielsweise bei Fahrzeugscheiben häufig vorkommt.

EP 2 689 929 A1 zeigt ein Verfahren, bei dem eine Metallschicht durch Heißprägen auf eine Basisschicht aufgebracht wird. Eine hieraus hergestellte Schichtenfolge wird in einer Gießform mit einem Bauteil hinterspritzt.

Die Erfindung hat die Aufgabe, ein weiteres Verfahren zur Herstellung eines polymeren Fahrzeug-Anbauteils mit Zierelement bereitzustellen. Das Zierelement soll dabei vor äußeren Einflüssen geschützt sein und eine optisch ansprechende und gut sichtbare Gestaltung der Scheibe ermöglichen. Zudem soll das Verfahren industriell einfach anwendbar sein.

Die Aufgabe der Erfindung wird durch das Verfahren gemäß Anspruch 1 gelöst. Bevorzugte Ausführungen gehen aus den Unteransprüchen hervor. Das erfindungsgemäße polymere Fahrzeug-Außenanbauteil und dessen erfindungsgemäße Verwendung gehen aus den nebengeordneten Ansprüchen hervor. Bevorzugte Ausgestaltungen gehen aus den Unteransprüchen hervor.

Das erfindungsgemäße Verfahren zur Herstellung eines polymeren Fahrzeug-Außenanbauteils mit Zierelement umfasst zumindest die folgenden Verfahrensschritte:
(a) ein polymeres spritzgegossenes Anbauteil wird bereitgestellt;
(b) ein Zierelement wird durch Heißprägen mittels eines Stempels von einer Trägerfolie auf eine erste Oberfläche des Anbauteils übertragen;
(c) zumindest die erste Oberfläche wird mit einer Schutzbeschichtung versehen,
wobei das Zierelement zumindest eine Dekorschicht und eine Haftschicht umfasst, die in dieser Reihenfolge auf der Trägerfolie angeordnet sind, wobei das Zierelement außerdem eine Schutzschicht umfasst, so dass die Dekorschicht zwischen der Schutzschicht und der Haftschicht angeordnet ist.

Das erfindungsgemäße polymere Anbauteil (oder Kunststoff-Anbauteil) ist ein äußeres Anbauteil, also ein Anbauteil für den Außenbereich des Fahrzeugs und nicht etwa für den Fahrzeug-Innenraum. Das Anbauteil ist ein spitzgegossenes Anbauteil. Das Anbauteil ist insbesondere eine Scheibe (insbesondere Fahrzeug-Fensterscheibe, beispielsweise Dachscheibe, Heckscheibe, Seitenscheibe), eine Säulenabdeckung, Leuchtenabdeckung, Kühlergrillverkleidung oder ein Spoiler. Eine Scheibe dient zur Abtrennung des Fahrzeug-Innenraums von der äußeren Umgebung.

Der Erfindung liegt die Erkenntnis zugrunde, dass das Verfahren des Heißprägens auf Anbauteile im Außenbereich eines Fahrzeugs anwendbar ist. Anbauteile im Außenbereich sind deutlich höheren Belastungen ausgesetzt als Interieurteile. Diese Belastungen sind insbesondere mechanische Belastungen, beispielsweise Steinschlag, Abrieb und Niederschlag. Bislang herrschte die Meinung vor, dass ein äußerlich aufgebrachtes Zierelement nicht stabil genug ist, um diesen Belastungen auf Dauer zu widerstehen. Die Erfinder haben überraschend festgestellt, dass durch eine Schutzbeschichtung (oder *Hardcoat*) das Anbauteil und das Zierelement mit einer ausreichenden Stabilität und Festigkeit versehen werden, um im Außenbereich verwendet zu werden.

Die Erfindung ermöglicht unter anderem die optische Aufwertung und Veredelung von Sichtflächen von Kunststoff-Fahrzeugscheiben, das Einbringen von Informationen (in Form von Text oder Symbolen), die Darstellung einer Vielzahl von optischen Effekten und Freiheit in der Farbgestaltung des Anbauteils durch eine Vielzahl verfügbarer Heißprägefolien.

Das Anbauteil ist typischerweise im Wesentlichen flächenhaft oder sogar plattenartig ausgestaltet und weist zwei Hauptflächen und eine umlaufende Seitenkante auf. Eine der Hauptflächen ist die erfindungsgemäße erste Oberfläche des Anbauteils, auf welche das Zierelement aufgebracht wird. Diese erste Hauptfläche ist insbesondere diejenige Fläche, welche als Außenfläche des Anbauteils vorgesehen ist. Mit Außenfläche wird dabei eine Fläche bezeichnet, die in Einbaulage der äußeren Umgebung des Fahrzeugs zugewandt ist.

Erfindungsgemäß wird das Zierelement durch Heißprägen auf das Anbauteil aufgebracht. Heißprägen wird häufig auch als Hubprägen oder mit dem englischsprachigen Begriff "Hot Stamping" bezeichnet. Dabei wird die Trägerfolie mit dem Zierelement so angeordnet, dass das Zierelement dem Anbauteil zugewandt ist. Anschließend wirkt der Stempel auf die vom Zierelement abgewandte Oberfläche der Trägerfolie ein, so dass das Zierelement gegen die erste Oberfläche angedrückt wird. Anschließend wird die Trägerfolie abgezogen, wobei das Zierelement auf der ersten Oberfläche verbleibt. Da Zierelement nimmt bevorzugt nur einen lokalen Teilbereich der ersten Oberfläche des Anbauteils ein.

Bevorzugt ist die Trägerfolie als eine auf Rollen befindliche Folienbahn ausgestaltet und trägt eine Vielzahl der Zierelemente, wobei beim Heißprägen jeweils ein Zierelement unter dem Stempel (das heißt zwischen Stempel und Anbauteil) angeordnet ist. Durch die Rollen kann die Folienbahn weitertransportiert werden, so dass das nächste Zierelement unter den Stempel befördert wird und auf das nächste Anbauteil aufgebracht werden kann. So kann eine wirtschaftliche industrielle Massenfertigung erreicht werden. In der Praxis kann die gesamte Trägerfolie mit einer durchgängigen ein- oder mehrschichtigen Zierbeschichtung besehen sein, wobei die einzelnen Zierelemente nicht voneinander getrennt sind. Die einzelnen Zierelemente werden erst während des Heißprägens durch die Haftwirkung am Anbauteil von der restlichen Beschichtung gelöst und dadurch individualisiert. Die Form des Zierelements wird dabei durch die Gestaltung der Kontaktfläche des Stempels festgelegt. Die Zierelemente können aber auch bereits auf der Trägerfolie durch Perforation oder Einschnitte in der Gesamtbeschichtung individualisiert sein, wodurch das Ablösen erleichtert wird.

Der Stempel weist eine erhöhte Temperatur auf, welche sich auf die Trägerfolie und das Zierelement überträgt, wodurch das Anhaften des Zierelements am Anbauteil begünstigt wird. Der Stempel weist bevorzugt eine Temperatur von 120 °C bis 250 °C auf, besonders bevorzugt von 140 °C bis 200 °C. Damit werden besonders gute Ergebnisse erzielt. Die genaue Temperatur ist auch von der verwendeten Folie abhängig und kann vom Fachmann den Herstellerangaben entnommen oder durch routinemäßige Vorversuche ermittelt werden.

Die Kontaktfläche des Stempels enthält bevorzugt Silikon oder ist aus Silikon ausgebildet. Die Kontaktfläche kann aber auch natürlichen oder synthetischen Kautschuk oder andere Elastomere enthalten oder daraus ausgebildet sein. Der Vorteil liegt in der weichen Ausgestaltung der Kontaktfläche, wodurch Beschädigungen am Anbauteil vermieden werden können. Die Kontaktfläche kann aber auch aus Metall gefertigt sein.

Die Kontaktfläche des Stempels ist naturgemäß deutlich kleiner als die erste Oberfläche des Anbauteils und wirkt nur auf einen lokalen Teilbereich der ersten Oberfläche ein.

In einer vorteilhaften Ausführung wirkt der Stempel mit einem Druck von 15 kg/cm² bis 50 kg/cm² auf die erste Oberfläche, bevorzugt von 20 kg/cm² bis 40 kg/cm², besonders bevorzugt von 25 kg/cm² bis 35 kg/cm². Damit wird ein besonders gutes Anhaften des Zierelements erreicht und das Anbauteil dennoch geschont.

Die Einwirkdauer des Stempels auf die erste Oberfläche des Anbauteils zum Aufbringen des Zierelements beträgt bevorzugt mindestens 1 s, besonders bevorzugt mindestens 2 s. Die Einwirkdauer kann beispielsweise von 1 s bis 10 s, bevorzugt von 2 s bis 4 s betragen. Dies ist vorteilhaft im Hinblick auf einerseits eine gute Haftwirkung und andererseits ein kurze Taktzeit.

Das Zierelement ist bevorzugt folienartig ausgebildet. Das Zierelement ist besonders bevorzugt als mehrschichtige Folie ausgebildet. Das Zierelement umfasst eine Dekorschicht und eine Haftschicht. Die Schichten sind in der angegebenen Reihenfolge mit zunehmendem Abstand zur Trägerfolie auf der Trägerfolie angeordnet. Das Zierelement kommt über die Haftschicht mit dem Anbauteil in Kontakt. Ist das Zierelement auf das Anbauteil übertragen, so lautet die Reihenfolge mit zunehmendem Abstand zur ersten Oberfläche: Haftschicht - Dekorschicht.

Die Haftschicht bewirkt eine Adhäsion zwischen Zierelement und Anbauteil. Dadurch ist die Haftung zwischen Zierelement und Anbauteil stärker als zwischen Zierelement und Trägerfolie, wodurch sich das Zierelement von der Trägerfolie löst. Durch die Haftschicht wird das Zierelement dauerhaft stabil auf der Oberfläche des Anbauteils fixiert. Die Haftschicht enthält in einer bevorzugten Ausgestaltung einen acrylbasierten Klebstoff. Dieser bewirkt eine besonders gute Haftung durch die Ausbildung von kovalenten Bindungen und Van-der-Waals-Kräften. Dieser Effekt ist besonders ausgeprägt, wenn das Anbauteil Polycarbonat enthält. Die Haftschicht kann alternativ aber auch andere geeignete Materialien enthalten, die eine Haftung begünstigen, beispielsweise Polyurethan oder Epoxidharz. Die Haftschicht weist bevorzugt eine Dicke von 0,1 µm bis 5,0 µm auf. Dadurch wird eine gute Haftwirkung erzielt, ohne die Dicke des Zierelements übermäßig zu erhöhen, wodurch der optische Eindruck verschlechtert würde. Die Haftschicht ist bevorzugt transparent, so dass die Sicht auf das Anbauteil nicht durch die Haftschicht gestört wird.

Die Dekorschicht trägt die eigentliche optische Wirkung des Zierelements. Sie kann daher auch als Farbschicht bezeichnet werden. Die Dekorschicht ist eine polymere Schicht, enthält also ein Polymer. Eine Vielzahl von Polymeren ist als Basismaterial für die Dekorschicht geeignet, beispielsweise Polymethylmethacrylat. Die Dekorschicht weist bevorzugt eine Dicke von 1,0 µm bis 10,0 µm auf. Um den optischen Eindruck des Zierelements zu erzeugen, kann die Dekorschicht beispielsweise mit einem Aufdruck versehen sein oder eingelagerte Farbmittel enthalten. Farbmittel sind Pigmente oder Farbstoffe, die anorganischer oder organischer Natur und bunt oder unbunt sein können. Geeignet als Druckfarbe oder Einlagerung sind beispielsweise temperaturstabile organische Pigmente oder Farbstoffe (wie Urethan-Acrylat-Polymere, Azofarbstoffe oder polycyclische Verbindungen) oder anorganische Pigmente (wie Kohlenstoff, Titandioxid, Ruß, Zinnober, Bismut- (Bismutvanadat), Spinellpigmente, Blei-, Quecksilber-, Zirkon-, Eisen-, Cadmium-, Kupfer-, Kobalt-, Nickel-, Chrompigmente; Aluminiumsilikate (Ultramarin)). Die Dekorschicht einfarbig oder mehrfarbig sein, unterschiedliche Schattierungen enthalten (beispielsweise unterschiedliche Graustufen), mit ganzflächigen oder partiellen Oberflächeneffekten ausgestaltet sein und/oder als Metallic-Effekt ausgeführt sein.

Erfindungsgemäß enthält das mehrschichtige Zierelement außer der Haftschicht und der Dekorschicht eine Schutzschicht. Das Zierelement enthält zumindest eine Dekorschicht, eine Haftschicht und eine Schutzschicht, welche in der angegebenen Reihenfolge mit zunehmendem Abstand zur Trägerfolie auf der Trägerfolie angeordnet sind. Ist das Zierelement auf das Anbauteil übertragen, so lautet die Reihenfolge mit zunehmendem Abstand zur ersten Oberfläche: Haftschicht - Dekorschicht - Schutzschicht.

Die Schutzschicht, welche im Endzustand am Anbauteil oberhalb der Dekorschicht positioniert ist, schützt die Dekorschicht vor mechanischer Einwirkung. Die Schutzschicht ist bevorzugt ein Schutzlack. Die Schutzschicht enthält bevorzugt ein Acryl-Polymer, Polymethylmethacrylat (PMMA) oder Polyurethan (PU). Die Schutzschicht weist bevorzugt eine Dicke von 0,5 µm bis 5,0 µm auf, womit besonders gute Ergebnisse erzielt werden.

Das Material der Schutzschicht ist bevorzugt auf das Material der später aufgebrachten Schutzbeschichtung abgestimmt. Falls die Schutzbeschichtung mehrschichtig ausgebildet ist, bezieht sich diese Abstimmung auf das Material derjenigen Schicht, die in direktem Kontakt zur Schutzschicht steht, also beispielsweise eine *Primer.* Beispielsweise und bevorzugt sind die Schutzschicht des Zierelements und die Schutzbeschichtung (beziehungsweise die unterste Schicht der Schutzbeschichtung, das heißt diejenige Schicht der Schutzbeschichtung, die den geringsten Abstand zum Anbauteil aufweist) auf Acrylbasis ausgebildet, enthalten also Polyacrylat. Dies ist im Hinblick auf die Haftung der Schutzbeschichtung sehr vorteilhaft durch die Ausbildung kovalenter Bindungen und van-der-Waals-Kräften sowie die Interdiffusion von Polymerketten.

Die Gesamtdicke des Zierelements beträgt bevorzugt bis zu 100 µm, besonders bevorzugt von 2 µm bis 20 µm, ganz besonders bevorzugt von 4 µm bis 10 µm. Damit wird eine deutliche optische Wirkung erreicht. Dennoch ist das Zierelement ausreichend dünn, um nicht als störende Erhebung aufzufallen.

Die Größe und Gestaltung des Zierelements kann den Anforderungen im Einzelfall entsprechend frei gewählt werden.

Die Trägerfolie weist typischerweise eine Dicke von 10 µm bis 500 µm, bevorzugt von 10 µm bis 50 µm, besonders bevorzugt von 15 µm bis 30 µm auf. Die Trägerfolie kann prinzipiell aber auch dicker sein (wodurch sie allerdings teurer wird) oder auch dünner (solange eine ausreichende Stabilität gewährleistet ist). Die Trägerfolie enthält bevorzugt Polyethylen-Terephthalat (PET), Polycarbonat (PC), Polybutylenterephthalat (PBT), Styrol-Acrylnitril (SAN) oder Gemische oder Copolymere davon. Dadurch wird eine ausreichende Stabilität erzielt.

In einer vorteilhaften Ausgestaltung ist zwischen der Trägerfolie und dem Zierelement eine Trennschicht angeordnet. Die Trennschicht erleichtert das Ablösen des Zierelements von der Trägerfolie nach dem Heißprägen. Die Trennschicht weist beispielsweise eine Dicke von 0,1 µm bis 5,0 µm auf.

Es kann vorteilhaft sein, das finale Zierelement durch mehrfaches Heißprägen auf dem Anbauteil zu erzeugen. Das bedeutet, das an derselben Stelle des Anbauteils mehrere identisch ausgeformte Zierelemente von ihrer Trägerfolie in Deckung zueinander auf die Oberfläche des Bauteils übertragen werden. Dadurch kann eine deutlich verbesserte Opazität und Brillanz des Zierelements erreicht werden und ein verbesserter Farbeindruck. Zu häufiges Heißprägen kann jedoch zu unscharfen Konturen des Zierelements führen. Idealerweise wird das Heißprägen zwei oder dreimal durchgeführt, insbesondere zweimal.

Erfindungsgemäß wird zumindest die erste Oberfläche des Anbauteils nach dem Aufbringen des Zierelements mit einer Schutzbeschichtung versehen. Bevorzugt wird die gesamte Oberfläche des Anbauteils mit der Schutzbeschichtung versehen. In einer bevorzugten Ausführung wird die Schutzbeschichtung mittels Flutbeschichtung (*flow coating*) aufgebracht. Dadurch kann eine homogene Beschichtung bei kurzen Taktzeiten erreicht werden. Alternativ sind aber auch andere Beschichtungsverfahren anwendbar, beispielsweise Tauch- oder Sprühbeschichtung oder *Inmould Coating-*Verfahren.

Die Schutzbeschichtung wird häufig auch als Kratzfestbeschichtung oder mit dem englischsprachigen Begriff "hardcoat" bezeichnet. Bevorzugt werden thermisch härtende oder UV-härtende Lacke, insbesondere auf Basis von Polysiloxanen, Polyacrylaten, Polymethacrylaten, Polyurethanen oder Gemischen oder Copolymeren davon als Schutzbeschichtung verwendet. Die Schutzbeschichtung kann eine oder mehrere separat aufgebrachte Schichten aufweisen und hat bevorzugt eine Gesamtschichtdicke von 1 µm bis 50 µm, besonders bevorzugt von 2 µm bis 25 µm. Sie verleiht dem Anbauteil eine gute Kratzbeständigkeit, Witterungsbeständigkeit sowie chemische Resistenz. Insbesondere wird das Zierelement geschützt. Die Schutzbeschichtung kann auch UV-Blocker, Konservierungsstoffe sowie Komponenten zur Erhöhung der Kratzfestigkeit, beispielsweise Nanopartikel enthalten. Zusätzlich kann die Schutzbeschichtung auch noch dekorative Funktionen, wie Glanz- oder Perleffekte wahrnehmen. Die Schutzbeschichtung wird nach dem Aufbringen bevorzugt durch Erhitzen und/oder UV-Strahlung ausgehärtet.

Die Schutzbeschichtung kann durch eine einzelne Schicht ausgebildet sein. Die Schutzbeschichtung kann aber auch mehrere einzelne Schichten ausweisen. Eine solche mehrschichtige Schutzbeschichtung umfasst unterhalb des eigentlichen *Hardcoat* bevorzugt eine haftvermittelnde Beschichtung, einen sogenannten *Primer*. "Unterhalb" bedeutet, dass der Primer zwischen Anbauteil und dem eigentlichen *Hardcoat* angeordnet ist. Der Primer enthält bevorzugt Polymethylmethacrylat, UV-Absorber und alkoholische Lösemittel. Die Schichtdicke des Primers beträgt beispielsweise von 0,2 µm bis 8,0 µm, bevorzugt von 1,0 µm bis 4,0 µm.

Das polymere Anbauteil wird durch Spritzguss hergestellt. Das polymere Anbauteil kann aus einer einzigen homogenen Materialkomponente (oder Materialphase) ausgebildet sein. Die Materialphase kann dabei transparent (wie bei einer Fensterscheibe) oder opak (wie bei einer Säulenabdeckung) ausgebildet sein. Häufig umfasst das Anbauteil aber mehrere Materialphasen, insbesondere zwei Materialphasen, wobei eine Materialphase transparent und die andere Materialphase opak ausgebildet ist. Die erste Oberfläche des Anbauteils, welche mit dem Zierelement versehen wird und in Einbaulage der äußeren Umgebung zugewandt ist, ist typischerweise die Oberfläche der transparenten Materialphase. Die transparente Materialphase und die opake Materialphase können im Wesentlichen deckungsgleich sein. Dann ist das gesamte Anbauteil opak, wobei durch die transparente Materialphase ein glasartiger optischer Eindruck erzeugt wird. Die opake Komponente kann aber auch nur in Teilbereichen des Anbauteils vorhanden sein. Dies ist beispielsweise bei Fensterscheiben der Fall, wo die opake Komponente typischerweise in einem umlaufenden Randbereich angeordnet ist, so dass die Scheibe für den Betrachter nicht sichtbar mit der Fahrzeugkarosserie verklebt werden kann. Das erfindungsgemäße Zierelement kann dabei im opaken oder im transparenten Bereich der Scheibe angeordnet werden. Opak bedeutet im Sinne der Erfindung, dass ein Betrachter nicht durch die Komponente hindurchblicken kann. Die Transmission im sichtbaren Spektralbereich ist also deutlich herabgesetzt und beträgt kleiner 10 %, bevorzugt kleiner oder gleich 5 %, insbesondere etwa 0%. Transparent bedeutet im Sinne der Erfindung, dass ein Betrachter durch die Komponente hindurchblicken kann und Objekte, die sich vom Betrachter aus gesehen hinter der Komponente befinden, erkennen kann. Der Transmissionsgrad im sichtbaren Spektralbereich (400 nm bis 800 nm) liegt dabei bei mindestens 10 %.

Ein Anbauteil aus mehreren Materialphasen wird bevorzugt im Mehrkomponenten-Spritzguss- oder im Mehrkomponenten-Spritzprägeverfahren, besonders bevorzugt in Kombination mit Wendeplattentechnologie, Drehteller- und/oder Indexplattentechnologie hergestellt. Alternativ kann das Kunststoff-Fahrzeuganbauteil auch alleine über Wendeplattentechnologie, Drehteller- und/oder Indexplattentechnologie hergestellt werden.

Das Anbauteil kann prinzipiell aus jedem Polymer gefertigt sein, das eine ausreichende Stabilität gewährleistet. Bevorzugt enthält das Anbauteil Polyethylen (PE), Polycarbonat (PC), Polypropylen (PP), Polystyrol, Polybutadien, Polynitril, Polyester, Polyurethan, Polymethylmethacrylat (PMMA), Polyacrylat, Polyamid, Polyethylenterephthalat (PET), Polybutylenterephthalat (PBT) Acrylnitril-Butadien-Styrol (ABS), Acrylester-Styrol-Acrylnitril (ASA), Acrylnitril-Butadien-Styrol - Polycarbonat (ABS/PC), PET/PC, PBT/PC oder Copolymere oder Gemische. Besonders bevorzugt sind PC, PMMA, SAN, ASA, PET oder Copolymere oder Gemische davon.

Das polymere Anbauteil kann anorganische oder organische Füllstoffe enthalten, bevorzugt SiO₂, Al₂O₃, TiO₂, Tonmineralien, Silikate, Zeolithe, Glasfasern, Kohlenstofffasern, Glaskugeln, organische Fasern und/oder Gemische davon. Die Füllstoffe können die Stabilität des Anbauteils weiter erhöhen. Zudem können die Füllstoffe den Anteil an polymeren Materialien verringern und so die Herstellungskosten vermindern.

Die Dicke (oder Materialstärke) des Anbauteils beträgt typischerweise von 1 mm bis 20 mm, insbesondere von 2 mm bis 10 mm, insbesondere wenn das Anbauteil eine Säulenabdeckung oder Scheibe ist.

Die Erfindung umfasst außerdem ein polymeres Fahrzeug-Außenanbauteil mit Zierelement, mindestens umfassend:
- ein polymeres spritzgegossenes Anbauteil,
- ein auf eine erste Oberfläche des Anbauteils mittels Heißprägen aufgebrachtes Zierelement und
- eine Schutzbeschichtung zumindest auf der ersten Oberfläche mit dem Zierelement,
wobei das Zierelement, ausgehend von der ersten Oberfläche des Anbauteils, in dieser Reihenfolge, zumindest umfasst:
- eine Haftschicht,
- eine Dekorschicht, und
- eine Schutzschicht.

Die vorstehend im Zusammenhang mit dem Verfahren beschriebenen bevorzugten Ausgestaltungen gelten in gleicher Weise für das erfindungsgemäße Fahrzeug-Anbauteil.

Die Erfindung umfasst außerdem die Verwendung eines erfindungsgemäßen polymeren Fahrzeug-Anbauteils für Außenanwendungen in Fahrzeugen, also als Außenanbauteil für Fahrzeuge, bevorzugt als Fahrzeugscheibe, insbesondere Fensterscheibe, Säulenabdeckung, Leuchtenabdeckung, Kühlergrillverkleidung oder Spoiler.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt eines polymeren Anbauteils während des erfindungsgemäßen Verfahrens,
- Fig. 2: einen Querschnitt durch eine Ausgestaltung einer Trägerfolie mit Zierelement,
- Fig. 3: einen Querschnitt durch eine Ausgestaltung des erfindungsgemäßen polymeren Anbauteils mit Zierelement und
- Fig. 4: ein Ausführungsbeispiel des erfindungsgemäßen Verfahrens anhand eines Flussdiagramms.

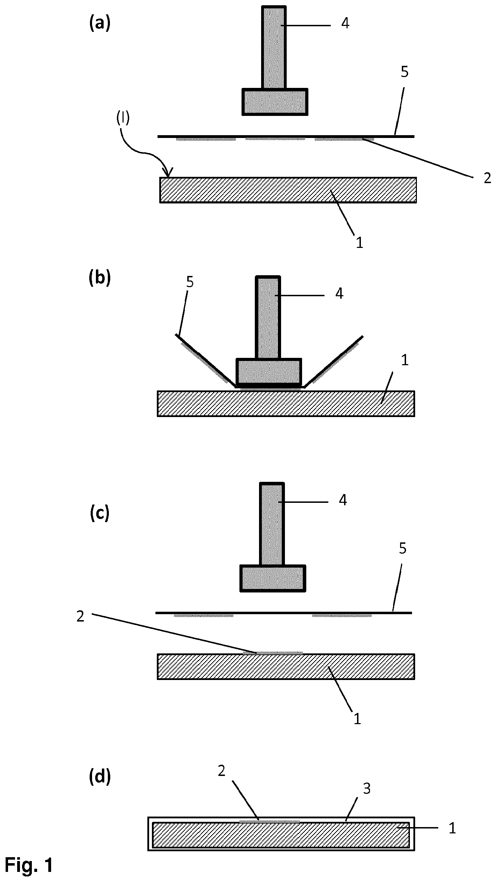

Figur 1 zeigt einen Querschnitt eines polymeren Anbauteils zu verschiedenen Zeitpunkten des erfindungsgemäßen Verfahrens: (a) vor dem Heißprägen, (b) während des Heißprägens, (c) nach dem Heißprägen und (d) nach dem Aufbringen der Schutzbeschichtung. Das polymere Anbauteil 1 ist beispielsweise ein Kunststofffenster für ein Kraftfahrzeug, beispielsweise eine hintere Seitenscheibe. Das polymere Anbauteil 1 kann aber auch ein anderes äußeres Anbauteil eines Fahrzeugs sein, beispielsweise eine Säulenabdeckung, ein Spoiler oder eine Leuchtenabdeckung. Das polymere Anbauteil 1 besteht beispielsweise aus Polycarbonat und weist eine Dicke von 4 cm auf. Die Fensterscheibe, welche in der Realität typischerweise aus zwei Materialphasen oder -komponenten besteht, nämlich einer die Gesamtfläche umfassende transparente Materialphase und eine im Randbereich umlaufend auf diese aufgebrachte opake Komponente, ist in der Figur der Einfachheit halber homogen dargestellt. Das erfindungsgemäße Verfahren ist auch an jeder Stelle des Anbauteils 1 durchführbar, also sowohl in transparenten als auch in opaken Bereichen, so dass der genaue Aufbau des Anbauteils 1 nicht von Bedeutung ist.

Das Anbauteil 1 wird unter einem Stempel 4 positioniert (Fig. 1(a)), wobei die erste Oberfläche (I) des Anbauteils, welche später in Einbaulage als Außenfläche vorgesehen ist, dem Stempel 4 zugewandt ist. Zwischen Stempel 4 und Anbauteil 1 wird ein Zierelement 2 auf einer Trägerfolie 5 positioniert. Die Trägerfolie 5 ist eine Folienbahn mit einer Vielzahl von Zierelementen 2, welche auf zwei nicht dargestellte Rollen aufgewickelt ist. Dadurch kann die Trägerfolie 5 weitertransportiert werden, so dass ein weiteres Zierelement 2 unter den Stempel 4 befördert wird und zum Aufbringen auf ein weiteres Anbauteil 1 bereitgestellt wird.

Das Zierelement 2 ist als mehrschichtige Folie ausgebildet, welche nachstehend genauer beschrieben wird. Des besseren Verständnisses halber sind die verschiedenen Zierelemente 2 als diskrete Elemente auf der Trägerfolie 5 dargestellt. Typischerweise wird in der Realität die mehrschichtige Folie die Trägerfolie im Wesentlichen vollflächig bedecken, wobei sich die einzelnen Zierelemente 2 durch die Haftwirkung am Anbauteil 1 von der Gesamtfolie lösen. Dieses Ablösen kann auch durch Einschnitte oder Perforationen in der Gesamtfolie erleichtert werden.

Der Stempel 4 wirkt auf die vom Zierelement 2 abgewandte Oberfläche der Trägerfolie 5 ein, so dass das Zierelement 2 an die erste Oberfläche (I) des Anbauteils 1 angedrückt wird (Fig. 1(b)), beispielsweise mit einem Druck von 30 kg/cm². Der Stempel 4 hat dabei eine Temperatur von beispielsweise etwa 160°C. Die Einwirkdauer des Stempels 4 auf die Oberfläche (I) des Anbauteils 1 beträgt beispielsweise 2,5 s. Das Einwirken des Stempels 4 wird typischerweise durch ein Absenken desselben auf das Anbauteil 1 erreicht, kann aber alternativ oder zusätzlich durch ein Anheben des Anbauteils 1 gegen den Stempel 4 erreicht werden.

Anschließend werden Stempel 4 und Anbauteil 1 wieder voneinander gelöst und die Trägerfolie 5 abgezogen, wobei das Zierelement 2 auf der Oberfläche (I) des Anbauteils 1 verbleibt (Fig. 1(c)).

Anschließend wird das Anbauteil 1 mit dem Zierelement 2 mit einer Schutzbeschichtung 3 versehen (Fig. 1(d)), welche beispielsweise zweischichtig ausgeführt ist und einen acrylbasierten Primer und ein darauf aufgebachtes Polysiloxan-basiertes *Hardcoat* umfasst.

Dadurch, dass das Zierelement 2 auf der äußeren Oberfläche (I) des Anbauteils 1 aufgebracht ist, ist es später in Einbaulage stets gut zu erkennen, auch wenn das Anbauteil eine geringe oder gar keine Lichttransmission aufweist. Dies ist ein großer Vorteil gegenüber einigen herkömmlichen, mittels Folienhinterspritzung eingebrachten Zierelementen, welche in Blickrichtung hinter dem Anbauteil (oder zumindest einer Komponente des Anbauteils) angeordnet sind. Trotzdem ist das Zierelement 2 durch die Schutzbeschichtung 3 vor mechanischer Beschädigung geschützt, wodurch die Heißprägetechnik für äußere Bauteile einsetzbar wird und auch die hohen Stabilitätsanforderungen an Fahrzeugbauteile erfüllt (Scheiben aus starrem Kunststoff, ECE R43 Anhang 14, Klasse /M). Diese Erkenntnis war für den Fachmann unerwartet und überraschend.

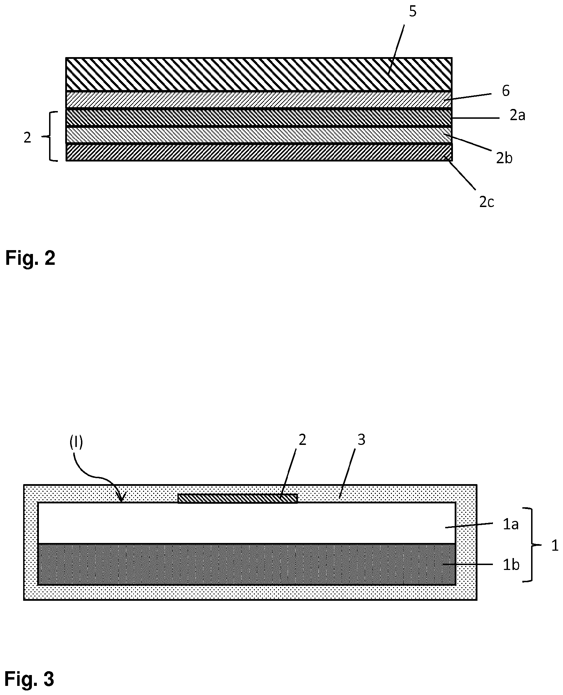

Figur 2 zeigt beispielhaft den Aufbau einer geeigneten Trägerfolie 5 mit Zierelement 2. Die Trägerfolie besteht aus PET und weist eine Dicke von 20 µm auf. Das Zierelement 2 besteht aus drei Schichten, nämlich mit zunehmendem Abstand von der Trägerfolie: eine Schutzschicht 2a, eine Dekorschicht 2b und eine Haftschicht 2c. Das Zierelement 2 tritt über die Haftschicht 2c mit dem Anbauteil 1 in Kontakt. Die Haftschicht 2c bewirkt eine starke Adhäsion zwischen Zierelement 2 und Anbauteil 1. Die Haftschicht 2c ist beispielsweise eine Schicht eines acrylbasierten Klebstoffs mit einer Dicke von 1,0 µm. Die Dekorschicht 2b bewirkt den eigentlichen optischen Eindruck des Zierelements 2. Die Dekorschicht 2b ist beispielsweise eine Schicht mit einer Dicke von 5,0 µm basierend auf Polyacrylat, die durch eingelagerte oder aufgedruckte Pigmente oder Farbstoffe in Form der gewünschten Verzierung eingefärbt ist. Die Schutzschicht 2a ist beispielsweise eine acrylbasierte Polymerschicht mit einer Dicke von 1,0 µm. Die Schutzschicht schützt die Dekorschicht vor mechanischer Beschädigung, wenn das Zierelement 2 auf das Anbauteil 1 aufgebracht ist.

Zwischen der Trägerfolie 5 und dem Zierelement 2 ist eine Trennschicht 6 angeordnet, welche das Ablösen des Zierelements 2 von der Trägerfolie 5 begünstigt. Die Trennschicht weist beispielsweise eine Dicke von 0,5 µm auf.

Figur 3 zeigt einen Querschnitt durch ein erfindungsgemäßes Anbauteil 1 mit Zierelement 2. Das Anbauteil 1 besteht aus einer transparenten Materialphase 1a und einer opaken Materialphase 1b. Ein solcher Aufbau tritt beispielsweise im Randbereich von Fensterscheiben oder ganzflächig bei Säulenabdeckungen auf. In letzterem Fall erzeugt die transparente Phase einen glasartigen Effekt mit Tiefenwirkung auf der Oberfläche der opaken Phase, was optisch sehr ansprechend ist. Die transparente Materialphase 1a besteht beispielsweise aus Polycarbonat (PC) und weist eine Dicke von 4 mm auf. Die opake Materialphase 1b besteht beispielsweise aus einem PC/ABS-Gemisch und weist eine Dicke von 2,5 mm auf. Die transparente Materialphase 1a, welche in Einbaulage der äußeren Umgebung zugewandt sein soll, kann klar und farblos, aber auch getönt oder gefärbt sein, wie es beispielsweise bei Privacy-Verscheibungen der Fall ist. Trotzdem ist das Zierelement 2 auf der äußeren Oberfläche (I) gut zu erkennen.

Das Anbauteil 1 mit dem Zierelement 2 ist mit einer Schutzbeschichtung 3 versehen, wodurch das Anbauteil 1 und insbesondere auch das Zierelement 2 vor mechanischer Beschädigung geschützt wird. Ohne die Schutzbeschichtung 3 wäre das Zierelement 2 zu anfällig gegenüber Abrieb, wodurch ein Einsatz des Anbauteils 1 als äußeres Anbauteil, also im Außenbereich des Fahrzeugs, ausgeschlossen wäre. Die Schutzbeschichtung 3 und die Schutzschicht 2a des Zierelements 2 sind bevorzugt aufeinander abgestimmt. Wird das Zierelement 2 aus Figur 2 verwendet mit der acrylbasierten Schutzschicht 2a, so wird als Schutzbeschichtung 3 bevorzugt ein acrylbasierter Primer in Kombination mit einem Polysiloxan-Hardcoat verwendet. Dadurch wird die Haftung der Schutzschicht 3 auf dem Zierelement 2 vorteilhaft beeinflusst.

Die Schutzbeschichtung enthält auch UV-Blocker, wodurch das Zierelement 2 vor Ausbleichen infolge von UV-Bestrahlung geschützt wird.

Die Dicke der Schutzschicht 3 beträgt beispielsweise etwa 20 µm. Die Dicke der Schutzschicht 3 kann über das gesamte Anbauteil konstant sein. Die Dicke der Schutzschicht 3 kann aber auch - wie in der Figur schematisch dargestellt - im Bereich des Zierelements 2 etwas dünner sein, so dass die Gesamtdicke von Schutzbeschichtung 3 und Zierelement 2 der Dicke der Schutzbeschichtung 3 in den Bereichen der ersten Oberfläche (I) ohne Zierelement 2 annähernd entspricht. Dadurch wird eine homogene Oberfläche ohne störende Erhebungen erzeugt.

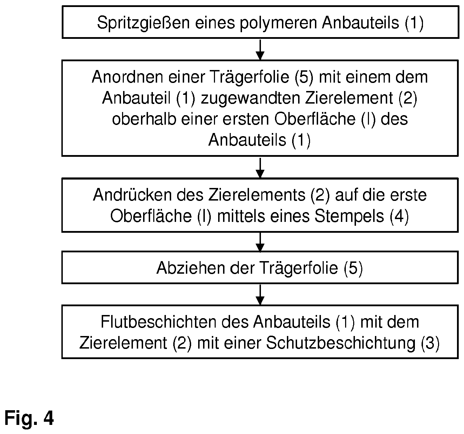

Figur 4 zeigt ein Flussdiagramm eines Ausführungsbeispiels des erfindungsgemäßen Verfahrens zur Herstellung eines polymeren Fahrzeug-Anbauteils mit Zierelement.

Die Festigkeit des Haftverbundes erfindungsgemäß hergestellter Anbauteile mit Zierelement wurde mittels Prüfverfahren nach DIN EN ISO 2409 sowie Prüfverfahren, wie sie von vielen Fahrzeugherstellern gefordert werden, beispielsweise H₂O-Hochdruckbestrahlung, ermittelt. Die Kratz- bzw. Abriebbeständigkeit wurde mittels Crockmetertest und Bearbeitung mit Bürsten einer Fahrzeug-Waschanlage überprüft. Der Schichtaufbau stellt sich dabei als ausreichend haftstabil, abriebfest und kratzfest heraus, um auf der Außenfläche eines äußeren Fahrzeug-Anbauteils verwendet zu werden. Außerdem wurde die UV-Beständigkeit durch intensive UV-Bestrahlung überprüft. Hierbei konnte keine strahlungsbedingte Degradation wie Farbverschiebung, Vergilben, Ausbleichen, Mikrorisse oder Delamination beobachtet werden.

Es war für den Fachmann unerwartet und überraschend, dass ein mittels Heißprägen aufgebrachtes Zierelement auf der Außenfläche eines Fahrzeug-Anbauteils verwendet werden kann. Bislang war man der Auffassung, dass dadurch keine ausreichende Abriebfestigkeit und mechanische Beständigkeit gewährleistet werden kann.

### Bezugszeichenliste:

- (1): polymeres Fahrzeug-Anbauteils
- (1a): transparente Materialphase von 1
- (1b): opake Materialphase von 1

- (2): Zierelement
- (2a): Schutzschicht von 2
- (2b): Dekorschicht von 2
- (2c): Haftschicht von 2

- (3): Schutzbeschichtung
- (4): Stempel
- (5): Trägerfolie
- (6): Trennschicht

- (I): erste Oberfläche von 1

## Patentansprüche

1. Verfahren zur Herstellung eines polymeren Fahrzeug-Außenanbauteils mit Zierelement, wobei
a. ein polymeres spritzgegossenes Anbauteil (1) bereitgestellt wird,
b. ein Zierelement (2) durch Heißprägen mittels eines Stempels (4) von einer Trägerfolie (5) auf eine erste Oberfläche (I) des Anbauteils (1) übertragen wird,
c. zumindest die erste Oberfläche (I) mit einer Schutzbeschichtung (3) versehen wird,
wobei das Zierelement (2) zumindest eine Dekorschicht (2b) und eine Haftschicht (2c) umfasst, die in dieser Reihenfolge auf der Trägerfolie (5) angeordnet sind,
wobei das Zierelement (2) außerdem eine Schutzschicht (2a) umfasst, so dass die Dekorschicht (2b) zwischen der Schutzschicht (2a) und der Haftschicht (2c) angeordnet ist.

2. Verfahren nach Anspruch 1, wobei in Verfahrensschritt (b)
- die Trägerfolie (5) mit dem Zierelement (2) so angeordnet wird, dass das Zierelement (2) dem Anbauteil (1) zugewandt ist,
- der Stempel (4) auf die vom Zierelement (2) abgewandte Oberfläche der Trägerfolie (5) einwirkt, so dass das Zierelement (2) gegen die erste Oberfläche (I) angedrückt wird, und
- die Trägerfolie (5) abgezogen wird, wobei das Zierelement (2) auf der ersten Oberfläche (I) verbleibt.

3. Verfahren nach Anspruch 1 oder 2, wobei die Schutzbeschichtung (3) thermisch härtende oder UV-härtende Lacke, bevorzugt Polysiloxane, Polyacrylate, Polymethacrylate, Polyurethane oder Gemische oder Copolymere davon enthält.

4. Verfahren nach einem der Ansprüche 1 bis 3, wobei die Dicke des Zierelements bis zu 100 µm beträgt, bevorzugt von 2 µm bis 20 µm.

5. Verfahren nach einem der Ansprüche 1 bis 4, wobei zwischen der Trägerfolie (5) und dem Zierelement (2) eine Trennschicht (6) angeordnet ist.

6. Verfahren nach einem der Ansprüche 1 bis 5, wobei der Stempel (4) in Verfahrensschritt (b) eine Temperatur von 120 °C bis 250 °C aufweist, bevorzugt von 140 °C bis 200 °C.

7. Verfahren nach einem der Ansprüche 1 bis 6, wobei der Stempel mit einem Druck von 15 kg/cm² bis 50 kg/cm² auf die erste Oberfläche (I) wirkt, bevorzugt von 20 kg/cm² bis 40 kg/cm², besonders bevorzugt von 25 kg/cm² bis 35 kg/cm², mit einer Einwirkdauer von mindestens 1 s, bevorzugt von 1 s bis 10 s, besonders bevorzugt von 2 s bis 4 s.

8. Verfahren nach einem der Ansprüche 1 bis 7, wobei die Schutzbeschichtung (3) durch Flutbeschichten aufgetragen wird.

9. Verfahren nach einem der Ansprüche 1 bis 8, wobei das Anbauteil (1) Polycarbonat (PC), Polymethylmethacrylat (PMMA), Styrol-Acrylnitril (SAN), Acrylester-Styrol-Acrylnitril (ASA), Polyethylenterephthalat (PET) oder Copolymere oder Gemische davon enthält.

10. Verfahren nach einem der Ansprüche 1 bis 9, wobei das Anbauteil (1) eine Dicke von 1 mm bis 20 mm, bevorzugt 2 mm bis 10 mm aufweist.

11. Verfahren nach einem der Ansprüche 1 bis 10, wobei die Haftschicht (2c) einen acrylbasierten Klebstoff enthält.

12. Polymeres Fahrzeug-Außenanbauteil mit Zierelement, mindestens umfassend:
- ein polymeres spritzgegossenes Anbauteil (1),
- ein auf eine erste Oberfläche (I) des Anbauteils (1) mittels Heißprägen aufgebrachtes Zierelement (2) und
- eine Schutzbeschichtung (3) zumindest auf der ersten Oberfläche (I) mit dem Zierelement (2),
wobei das Zierelement (2), ausgehend von der ersten Oberfläche (I) des Anbauteils (1), in dieser Reihenfolge, zumindest umfasst:
- eine Haftschicht (2c),
- eine Dekorschicht (2b), und
- eine Schutzschicht (2c).

13. Verwendung eines polymeren Fahrzeug-Anbauteils nach Anspruch 12 als Außenanbauteil für Fahrzeuge, bevorzugt als Fahrzeugscheibe, Säulenabdeckung, Leuchtenabdeckung, Kühlergrillverkleidung oder Spoiler.

## Claims

1. Method for producing a polymeric vehicle exterior attachment part with a decorative element, wherein
a. a polymeric injection molded attachment part (1) is prepared,
b. a decorative element (2) is transferred from a carrier film (5) onto a first surface (I) of the attachment part (1) by hot stamping using a stamp (4),
c. at least the first surface (I) is provided with a protective coating (3),
wherein the decorative element includes (2) at least one decorative layer (2b) and an adhesive layer (2c), which are arranged in this order on the carrier film (5), wherein the decorative element (2) also includes a protective layer (2a) such that the decorative layer (2b) is arranged between the protective layer (2a) and the adhesive layer (2c).

2. Method according to claim 1, wherein in process step (b)
- the carrier film (5) with the decorative element (2) is arranged such that the decorative element (2) faces the attachment part (1),
- the stamp (4) acts on the surface of the carrier film (5) facing away from the decorative element (2) such that the decorative element (2) is pressed against the first surface (I), and
- the carrier film (5) is detached, wherein the decorative element (2) remains on the first surface (I).

3. Method according to claim 1 or 2, wherein the protective coating (3) contains thermally curing or UV curing coatings, preferably polysiloxanes, polyacrylates, polymethyacrylates, polyurethanes, or mixtures or copolymers thereof.

4. Method according to one of claims 1 through 3, wherein the thickness of the decorative element is as much as 100 µm, preferably from 2 µm to 20 µm.

5. Method according to one of claims 1 through 4, wherein a separating layer (6) is arranged between the carrier film (5) and the decorative element (2).

6. Method according to one of claims 1 through 5, wherein, in process step (b), the stamp (4) has a temperature of 120 °C to 250 °C, preferably of 140 °C to 200 °C.

7. Method according to one of claims 1 through 6, wherein the stamp acts with a pressure of 15 kg/cm² to 50 kg/cm² on the first surface (I), preferably of 20 kg/cm² to 40 kg/cm², particularly preferably of 25 kg/cm² to 35 kg/cm², with a duration of action of at least 1 s, preferably of 1 s to 10 s, particularly preferably of 2 s to 4 s.

8. Method according to one of claims 1 through 7, wherein the protective coating (3) is applied by flow coating.

9. Method according to one of claims 1 through 8, wherein the attachment part (1) contains polycarbonate (PC), polymethylmethacrylate (PMMA), styrene acrylonitrile (SAN), acrylonitrile styrene acrylester (ASA), polyethylene terephthalate (PET), or copolymers or mixtures thereof.

10. Method according to one of claims 1 through 9, wherein the attachment part (1) has a thickness of 1 mm to 20 mm, preferably 2 mm to 10 mm.

11. Method according to one of claims 1 through 10, wherein the adhesive layer (2c) includes an acrylic-based adhesive.

12. Polymeric vehicle exterior attachment part with a decorative element, at least comprising:
- a polymeric injection molded attachment part (1),
- a decorative element (2) applied onto a first surface (I) of the attachment part (1) by hot stamping, and
- a protective coating (3) at least on the first surface (I) with the decorative element (2),
wherein the decorative element (2), starting from the first surface (I) of the attachment part (1), at least comprises, in that order:
- an adhesive layer (2c),
- a decorative layer (2b), and
- a protective layer (2c).

13. Use of a polymeric vehicle attachment part according to claim 12 as an exterior attachment part for motor vehicles, preferably as a vehicle window, pillar cover, luminaire cover, radiator grill panel, or spoiler.

## Revendications

1. Procédé de fabrication d'une pièce de fixation extérieure de véhicule en polymère avec un élément décoratif, dans lequel
a. une pièce de fixation (1) en polymère moulée par injection est préparée,
b. un élément décoratif (2) est transféré d'un film support (5) sur une première surface (I) de la pièce de fixation (1) par marquage à chaud à l'aide d'un tampon (4),
c. au moins la première surface (I) est recouverte d'un revêtement protecteur (3), l'élément décoratif comprend (2) au moins une couche décorative (2b) et une couche adhésive (2c), qui sont disposées dans cet ordre sur le film support (5), l'élément décoratif (2) comprenant également une couche protectrice (2a) de sorte que la couche décorative (2b) est disposée entre la couche protectrice (2a) et la couche adhésive (2c).

2. Procédé selon la revendication 1, dans lequel, à l'étape (b) du processus
- le film support (5) avec l'élément décoratif (2) est arrangé de telle sorte que l'élément décoratif (2) fait face à la pièce de fixation (1),
- le tampon (4) agit sur la surface du film support (5) opposée à l'élément décoratif (2) de sorte que l'élément décoratif (2) est pressé contre la première surface (I), et
- le film support (5) est détaché, l'élément décoratif (2) restant sur la première surface (I).

3. Procédé selon la revendication 1 ou 2, dans lequel le revêtement protecteur (3) contient des revêtements à durcissement thermique ou UV, de préférence des polysiloxanes, des polyacrylates, des polyméthyacrylates, des polyuréthanes, ou des mélanges ou copolymères de ceux-ci.

4. Procédé selon l'une des revendications 1 à 3, dans lequel l'épaisseur de l'élément décoratif peut atteindre 100 µm, de préférence de 2 µm à 20 µm.

5. Procédé selon l'une des revendications 1 à 4, dans lequel une couche de séparation (6) est arrangée entre le film support (5) et l'élément décoratif (2).

6. Procédé selon l'une des revendications 1 à 5, dans lequel, à l'étape (b) du procédé, le tampon (4) a une température de 120 °C à 250 °C, de préférence de 140 °C à 200 °C.

7. Procédé selon l'une des revendications 1 à 6, dans lequel le tampon agit avec une pression de 15 kg/cm² à 50 kg/cm² sur la première surface (I), de préférence de 20 kg/cm² à 40 kg/cm², de préférence encore de 25 kg/cm² à 35 kg/cm², avec une durée d'action d'au moins 1 s, de préférence de 1 s à 10 s, de préférence encore de 2 s à 4 s.

8. Procédé selon l'une des revendications 1 à 7, dans lequel le revêtement de protection (3) est appliqué par coulée.

9. Procédé selon l'une des revendications 1 à 8, dans lequel la pièce de fixation (1) contient du polycarbonate (PC), du polyméthacrylate de méthyle (PMMA), de l'acrylonitrile de styrène (SAN), de l'acrylonitrile styrène acrylester (ASA), du polyéthylène téréphtalate (PET), ou des copolymères ou des mélanges de ceux-ci.

10. Procédé selon l'une des revendications 1 à 9, dans lequel la pièce de fixation (1) a une épaisseur de 1 mm à 20 mm, de préférence de 2 mm à 10 mm.

11. Procédé selon l'une des revendications 1 à 10, dans lequel la couche adhésive (2c) comprend un adhésif à base d'acrylique.

12. Pièce de fixation extérieure en polymère de véhicule avec un élément décoratif, comprenant au moins
- une pièce de fixation en polymère moulée par injection (1),
- un élément décoratif (2) appliqué sur une première surface (I) de la pièce de fixation (1) par marquage à chaud, et
- un revêtement protecteur (3) au moins sur la première surface (I) avec l'élément décoratif (2),
dans lequel l'élément décoratif (2), à partir de la première surface (I) de la pièce de fixation (1), comprend au moins, dans cet ordre :
- une couche adhésive (2c),
- une couche décorative (2b), et
- une couche protectrice (2c).

13. Utilisation d'une pièce de fixation de véhicule en polymère selon la revendication 12 comme pièce de fixation extérieure pour les véhicules à moteur, de préférence comme fenêtre de véhicule, couvercle de pilier, couvercle de luminaire, panneau de calandre ou aileron.
